Europäisches Patentamt

European Patent Office

Office européen des brevets

(11) Veröffentlichungsnummer: **0 544 059 A1**

# EUROPÄISCHE PATENTANMELDUNG

(21) Anmeldenummer: **92113836.8**

(22) Anmeldetag: **13.08.92**

(51) Int. Cl.5: **B01D 17/025**

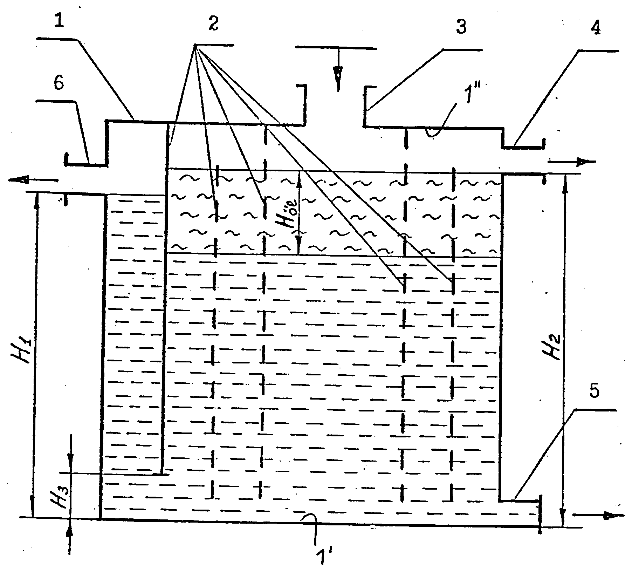

Ein Antrag gemäss Regel 88 EPÜ auf Berichtigung der Zeichnung, die Tabelle und Ansprüch 10 liegt vor. Über diesen Antrag wird im Laufe des Verfahrens von der Prüfungsabteilung eine Entscheidung getroffen werden (Richtlinien für die Prüfung im EPA, A-V, 2.2).

Ein Antrag gemäss Regel 88 EPÜ auf Berichtigung ...... liegt vor. Über diesen Antrag wird im Laufe des Verfahrens von der Prüfungsabteilung eine Entscheidung getroffen werden (Richtlinien für die Prüfung im EPA, A-V, 2.2).

(30) Priorität: **27.11.91 SU 5012765**

(43) Veröffentlichungstag der Anmeldung:
**02.06.93 Patentblatt 93/22**

(84) Benannte Vertragsstaaten:
**DE FR GB**

(71) Anmelder: **FIRMA RUMKO**
**In Kölln 4**
**W-6601 Heusweiler(DE)**

(72) Erfinder: **Schuschlebin, Boris Alekseevitsch**
**Sirenevii B.,d.27,k.3,kv.53**
**Moskau 105425(SU)**
Erfinder: **Ermolov, Victor Micheilovitsch**
**ul.ak.Vargi,d.36,kv.86**
**Moskau 117113(SU)**
Erfinder: **Mirakova, Marina Georgievna**
**2-aja ul. Marjinoi roschi,d.12,kv.8**
**Moskau 129594(SU)**
Erfinder: **Filatov, NikolaiJakovlevitsch**
**ul. Nizne-Pervomaiskaja,d.53,kv.299**
**Moskau 105203(SU)**
Erfinder: **Gordeev, Anatolii Dmitrievitsch**
**ul. Pererva,d.38,kv.25**
**Moskau 176514(SU)**

(74) Vertreter: **Pätzold, Herbert, Dr.-Ing.**
**Steubstrasse 10**
**W-8032 Gräfelfing (DE)**

(54) **Verfahren und Vorrichtung zum Trennen eines unstabilen Gemisches zweier Flüssigkeiten unterschiedlicher Dichte.**

(57) Die Erfindung betrifft ein Verfahren und eine Vorrichtung zum Trennen eines unstabilen Gemisches aus zwei Flüssigkeiten (Mischflüssigkeit) unterschiedlicher Dichte in einem Trenngefäß, das vorab mit den zwei Komponenten der Mischflüssigkeit aufgefüllt wird, wobei ein flüssiges Zweischichtensystem erhalten wird und daß anschließend in die auf der schwereren Flüssigkeit schwimmenden leichteren Flüssigkeitsschicht vorbestimmter Höhe die Mischflüssigkeit eingeleitet wird, wobei das Verhältnis zwischen der Höhe der leichteren Flüssigkeit und der Zulaufmenge der Mischflüssigkeit (gemessen in Volumeneinheiten pro Zeiteinheit) in Abhängigkeit von physikalischen Eigenschaften der beiden Flüssigkeiten bzw. der Mischflüssigkeit gewählt wird. Der Zulauf der Mischflüssigkeit kann kontinuierlich oder periodisch sein.

EP 0 544 059 A1

Die Erfindung bezieht sich auf ein Verfahren und eine Vorrichtung zum Trennen eines unstabilen Gemisches zweier Flüssigkeiten unterschiedlicher Dichte, z.B. Erdöl und Wasser.

Die Erfindung ist für den Schutz der Umwelt geeignet und dient insbesondere zur Erstreinigung von Gewässern und Abwässern, die durch Erdöl und Erdölerzeugnisse verunreinigt sind, wie sie vor allem bei der Erdölförderungund Erdölverarbeitung sowie der Herstellung und Verarbeitung von Erdölerzeugnissen weltweit in großen Mengen anfallen. Die Erfindung ist jedoch auf diese Anwendungsfälle nicht beschränkt. Sie ist grundsätzlich zur Trennung von Flüssigkeiten unterschiedlicher Dichte bzw. unterschiedlicher spezifischer Gewichte geeignet.

Der Erfindung liegt die Aufgabe zugrunde, eine höhere Leistungsfähigkeit und verbesserte Wirtschaftlichkeit beim Trennen zweier Verfahren in einem Trenngefäß zu erreichen.

Die Aufgabe wird erfindungsgemäß mit den Merkmalen des Verfahrensanspruches 1 erfüllt. Vorteilhafte Ausführungen des Verfahrens sowie die erfindungsgemäße Vorrichtung zur Durchführung des Verfahrens ergeben sich aus den Merkmalen der Unteransprüche und der nachfolgenden Beschreibung.

Erfindungsgemäß wird das Trenngefäß anfangs zunächst mit den zwei Komponenten der Mischflüssigkeit gefüllt, so daß man ein flüssiges Zweischichtensystem erhält. Anschließend wird die Mischflüssigkeit (periodisch oder kontinuierlich) in die auf der schwereren Flüssigkeit schwimmende leichtere Flüssigkeitsschicht eingebracht. Die Geschwindigkeit der Trennung der Mischflüssigkeit (Trenngeschwindigkeit) ist abhängig von der Geschwindigkeit des Ab- und Auftauchens der Tropfen der leichteren Flüssigkeit in der schwereren Flüssigkeit. Diese Trenngeschwindigkeit wird durch die allgemein bekannte Stock'sche Formel beschrieben:

$$V = K \frac{(\varsigma_1 - \varsigma_2) R^2}{(\mu_1 - \mu_2)}$$

wobei
K ein Koeffizient,
$(\rho_1 - \rho_2)$ die Differenz der Flüssigkeitsdichten,
$(\mu_1 - \mu_2)$ die Differenz der Flüssigkeitsviskositäten
und
R der Tropfenradius ist.

Aus der Stock'schen Formel folgt, daß die Trenngeschwindigkeit entscheidend von der Tropfengröße abhängt, die im wesentlichen durch Oberflächen- und Interphasenspannungen der Flüssigkeiten bestimmt ist.

Es läßt sich experimentell zeigen, daß beim Zufügen einer Mischflüssigkeit in die leichtere Flüssigkeitsschicht die beiden Komponenten der Mischflüssigkeit Tropfen bilden, wobei die Tropfen der schwereren Flüssigkeit wegen der höheren Oberflächenspannung immer größer werden und umso schneller absinken, während die kleineren Tropfen der leichteren Flüssigkeit sich in der Umgebung auflösen.

Die getrennten Flüssigkeiten werden durch die jeweilgen Überlaufe aus dem erfindungsgemäßen Trenngefäß abgeführt.

Zur erfindungsgemäßen Trennung eines Erdöl-Wasser-Gemisches wird das Trenngefäß im vorstehenden Sinne zunächst mit Wasser und Erdöl aufgefüllt, so daß eine Erdölschicht über der Wasserschicht vorhanden ist. Das Verhältnis zwischen den Höhen der Wasser- und Erdölschichten soll bei 1:(0,1 bis 0,5) und die Höhe der Erdölschicht $H_{Öl}$ soll bei einem stündlichen Zulauf P des Erdöl-Wasser-Gemisches , gemessen in Volumeneinheiten,

$$0,1 \sqrt[3]{P}$$

bis

$$0,25 \sqrt[3]{P}$$

betragen.

3

Die Trennung einer Mischflüssigkeit beruht auf den unterschiedlichen Dichten der beiden Komponenten. Beim Trennen eines Öl-Wasser-Gemisches spielt deswegen die Salzkonzentration im Wasser, z.B. Meerwasser eine wichtige Rolle. Beim Wasser kann die Dichte in Abhängigkeit von der Salzkonzentration zwischen 1,0 g/cm$^3$ und 1,05 g/cm$^3$ variieren. Für Erdölerzeugnisse schwankt die Dichte zwischen 0,76 g/cm$^3$ für Benzin und 0,99 g/cm$^3$ für Masut.

Bei der Trennung eines Erdöl-Wasser-Gemisches wird die Mischflüssigkeit einer Erdölschicht zugegeben, in der sich Erdöl- und Wassertropfen bilden. Wegen der höheren Oberflächenspannung des Wassers ($\sigma_{Wasser}$ = 72,5 mN/m) gegenüber der Oberflächenspannung des Erdöls ($\sigma_{Erdöl}$ = 30 mN/m) werden die Wassertropfen immer größer und sinken in der Erdölschicht daher umso schneller ab, während die Erdöltropfen sich in Erdöl auflösen.

Die festen Verunreinigungen, die zusammen mit der Mischflüssigkeit in den Zulauf gelangen, sinken zusammen mit dem Wasser ab und sammeln sich auf dem Gefäßboden. Sie werden nach bekannten Methoden entfernt.

Wenn die Höhe $H_{Öl}$ der Erdölschicht kleiner ist als

$$0,1\sqrt[3]{P}\quad,$$

dann wird bei gleichbleibendem Zulauf der Mischflüssigkeit das Wasser in nur unbefriedigender Weise aus der Erdölschicht entfernen, es müßte im Anschluß also eine zusätzliche Aufbereitung stattfinden.

Wenn die Höhe $H_{Öl}$ der Erdölschicht

$$0,25\sqrt[3]{P}$$

übersteigt, wird die Trennleistung schlechter und man findet im Wasserüberlauf mehr Erdöl.

Versuche zeigten, daß unabhängig von der Zulaufgeschwindigkeit der Mischflüssigkeit die Höhe der Erdölschicht erfindungsgemäß sich nicht mehr als um den Faktor 2,5 ändern sollte. Man erhält dann eine hohe Trennleistung bei hoher Wirtschaftlichkeit, ohne daß Zusatzfilter erforderlich sind. Wenn das Verhältnis zwischen den Höhen der Wasser- und Erdölschicht größer als 1:0,1 ist, dann ist es möglich, daß Wasser in den Erdölüberlauf gelangt. Das Verhältnis 1:0,1 darf jedoch erfindungsgemäß um 10% überschritten werden, ohne das Trennergebnis des erfindungsgemäßen Verfahrens wesentlich zu beeinträchtigen.

Wenn das Verhältnis zwischen den Höhen der Wasser- und der Erdölschicht kleiner ist als 1:0,5, erhöht sich der Restölgehalt im Wasserüberlauf.

Eine erfindungsgemäße Vorrichtung ist für ein Ausführungsbeispiel in einer Zeichnung schematisch dargestellt.

Die Zeichnung zeigt einen Querschnitt durch ein erfindungsgemäßes Trenngefäß 1 zum Trennen einer Mischflüssigkeit, z.B. aus Erdöl und Wasser. Das Trenngefäß 1 enthält mehrere innere vertikale Scheidewände 2, einen Zulauf 3 für die Mischflüssigkeit, einen Überlauf 4 für die leichtere Flüssigkeit, einen weiteren Überlauf 5 für die schwerere Flüssigkeit, eine Trennwand 6 und einen Bodenaustrag 7 für anfallende feste Verunreinigungen. Es ist nicht prinzipiell notwendig, kann aber gegebenenfalls von Vorteil sein, wenn das Volumen zwischen der Trennwand 6 und dem Überlauf 4 wesentlich größer gewählt ist als das Volumen zwischen der Trennwand 6 und dem Überlauf 5.

Die Anzahl der Scheidewände 2 kann verschieden sein und hängt von der Art der beiden Flüssigkeitskomponenten ab. Dabei stehen die Gefäßräume zwischen den Scheidewänden 2 untereinander in Verbindung. Die Trennwand 6 ist vor dem Überlauf 5 der schwereren Flüssigkeit befestigt und weist einen bestimmten Abstand $H_3$ von dem Gefäßboden 1' auf. Die Überlaufniveaus der schwereren und der leichteren Flüssigkeit befinden sich auf den Höhen $H_1$ und $H_2$ über dem Gefäßboden 1'.

Alle Teile des erfindungsgemäßen Trenngefäßes 1 können aus unterschiedlichen Stoffen hergestellt sein (z.B. Stahl, Metallegierungen, Kunststoff). Das Trenngefäß 1 selbst kann geschweißt oder gegossen sein. Der Zulauf 3 für die Mischflüssigkeit kann sich sowohl in einer Gefäßabdeckung 1 als auch in einer Seitenwand des Trenngefäßes 1 befinden. Die beiden Überläufe 4 und 5 befinden sich an gegenüberliegende Seitenwänden des Trenngefäßes 1. Bei Bedarf können sie auch an derselben Seitenwand angeordnet sein. Alle Scheidewände 2 sind entlang der vollen Höhe an einer Seitenwand befestigt, und wahren jeweils einen Abstand zur gegenüberliegenden Seitenwand des Trenngefäßes 1.

Zum Entfernen der festen Verunreinigungen können auf dem Boden 1' des Trenngefäßes, z.B. ein oder mehrere Sammelbehälter angeordnet sein, um die Verunreinigungen auf bekannte Weise aus dem Trenngefäß entfernen zu können.

Das erfindungsgemäße Trenngefäß ist in der Herstellung besonders einfach und benötigt keine spezielle Wartung. Es kann für eine periodische oder kontinuierliche Arbeitsweise eingesetzt werden.

Für die erfindungsgemäße Trennung, z.B. einer Mischflüssigkeit aus Erdöl und Wasser wird die Trennwand 6 relativ nahe vor dem Wasserüberlauf 5 befestigt. Für die Trennung einer solchen Mischflüssigkeit sind folgende Verhältnisse einzuhalten:

$H_1 : H_2 = 1:(1,005 \text{ bis } 1,25)$
$H_1 : H_3 = 1:(0,05 \text{ bis } 0,20),$

wobei
$H_1$ die Höhe des Wasserüberlaufs 5 ist,
$H_2$ die Höhe des Ölüberlaufs jeweils vom Gefäßboden aus gemessen ist, und
$H_3$ der Abstand des unteren Endes der Trennwand 6 vom Gefäßboden 1'ist.

Wenn das Verhältnis $H_1 : H_2 = 1:1,005$ übersteigt, tritt ein wesentlicher Teil des Wassers über den Erdölüberlauf aus. Der Fehlaustrag an Wasser kann sogar bis zur ursprünglichen Konzentration im Gemisch ansteigen. Wenn das Verhältnis von $H_1 :H_2$ kleiner als 1:1,25 gewählt ist, ist es möglich, daß Erdöl unter die Trennwand 6 hindurch in den Wasserüberlauf 5 gelangt. Die Wahrscheinlichkeit hierfür wächst mit der Erhöhung des stündlichen Zulaufs des Erdöl-Wasser-Gemisches.

Wenn das Verhältnis $H_1 :H_3$ größer ist als 1:0,05, sinkt die Leistungsfähigkeit des Trenngefäßes besonders bei niedrigen Erdölkonzentrationen.

Wenn das Verhältnis $H_1 :H_3$ kleiner als 1:0,2 ausfällt, ist es möglich, daß das Erdöl unter die Trennwand 6 und in den Wasserüberlauf gelangt, wodurch sich der Wirkungsgrad des Trenngefäßes verschlechtert.

In der nachfolgenden Tabelle 1 sind für verschiedene $H_1/H_2$-, $H_1/H_3$- und $H_1/H_{Öl}$-Verhältnisse bei unterschiedlichen stündlichen Zuläufen P an Gemischen, unterschiedlichen $H_{Öl}$-Werten und unterschiedlichen Erdölkonzentrationen in der Mischflüssigkeit die im abgeschiedenen Wasser noch enthaltenen Erdölmengen angegeben, wodurch die Wirksamkeit des erfindungsgemäßen Verfahrens verdeutlicht wird. Das Trenngefäß hatte ein Volumen von 0,015 m$^3$. Entsprechende Ergebnisse wurden mit einem Trenngefäß erzielt, das ein Volumen von 2m$^3$ hatte.

In der Tabelle 2 sind weitere Versuchsergebnisse mit einem erfindungsgemäßen Trenngefäß (Separator) zusammengestellt, wobei verschiedene Flüssigkeitsgemische aus Wasser und unterschiedlichen Erdölerzeugnissen (Petroleum, Benzin, Musat, Vakuumöl) nach dem erfindungsgemäßen Verfahren getrennt wurden.

Es ist klar, daß zwei oder mehrere erfindungsgemäße Trenngefäße hintereinandergeschaltet sein können, wobei das abgeschiedene Wasser des ersten Trenngefäßes als Mischflüssigkeit dem nachgeschalteten zweiten Trenngefäß zur ersten Nachreinigung zugeführt wird, usw. Die Zufügung der Mischflüssigkeit in das Trenngefäß kann kontinuierlich oder periodisch erfolgen.

TABELLE 1

| | Verhältnis $H_1:H_{Öl}$ | stündlicher Zulauf des Erdöl-Wasser-Gemisches P $(dm^3)$ | $H_{Öl}$ | Verhältnisse | | Erdölkonzentration (mg/l) | |
| --- | --- | --- | --- | --- | --- | --- | --- |
| | | | | $H_1:H_2$ | $H_1:H_3$ | in der Misch-flüssigkeit (Zulauf) | im Wasserablauf |
| 1. | 1:0,1 | 125 | $0,1\sqrt[3]{P}=0,5$ | 1:1,250 | 1:0,2 | 500 | 10 |
| 2. | 1:0,3 | 64 | $0,15\sqrt[3]{P}=0,6$ | 1:1,150 | 1:0,1 | 1500 | 15 |
| 3. | 1:0,5 | 27 | $0,25\sqrt[3]{P}=0,75$ | 1:1,005 | 1:0,05 | 50 | 5 |

EP 0 544 059 A1

TABELLE 2

| Erdöl-erzeugnisse | Stündlichen Zulauf des Gemisches m³/St. | Dichte der Erdöl-erzeugnissen g/cm³ | Flüssigkeits-viskosität g/cm sek | Temperatura des Gemisches C° | Erdölerzeugn.-konzentration in Gemisch Zulauf % | | Konzentreazion in Ablauf des Separartors % | |
|---|---|---|---|---|---|---|---|---|
| | | | | | von | bis | Erdölerz. in Wasser | Wasser in Erdöl |
| Petroleum | 0.5 | 0.82 | 149 | 25 | 3 | 28 | < 0.002 | < 1.0 |
| Benzin | 0.5 | 0.75 | 53 | 25 | 5 | 30 | < 0.002 | < 1.0 |
| Masut | 0.5 | 0.96 | > 500 | 25 | 20 | 90 | < 0.004 | < 4.0 |
| Vakuumöl | 0.3 | 0.85 | 327 | 20 | 1 | 50 | < 0.002 | < 1.0 |

**Patentansprüche**

1. Verfahren zum Trennen eines unstabilen Gemisches aus zwei Flüssigkeiten unterschiedlicher Dichte (Mischflüssig-keit) in einem Trenngefäß mit wenigstens einem Zulauf für die Mischflüssigkeit und auf unterschiedlichen Niveaus liegenden Überläufen für die getrennten Flüssigkeiten,

**dadurch gekennzeichnet,**

daß das Trenngefäß vorab mit den zwei Komponenten der Mischflüssigkeit aufgefüllt wird, wobei ein flüssiges Zweischichtensystem erhalten wird und daß anschließend in die auf der schwereren Flüssigkeit schwimmenden leichteren Flüssigkeitsschicht vorbestimmter Höhe die Mischflüssigkeit kontinuierlich oder periodisch eingeleitet wird, wobei das Verhältnis zwischen der Höhe der leichteren Flüssigkeit und der Zulaufmenge der Mischflüssigkeit (gemessen in Volumeneinheiten pro Zeiteinheit) in Abhängigkeit von physikalischen Eigenschaften der beiden Flüssigkeiten bzw. der Mischflüssigkeit gewählt wird.

2. Verfahren nach Anspruch 1, dadurch gekennzeichnet, daß beim Trennen einer Mischflüssigkeit aus Erdöl und Wasser das Verhältnis zwischen der Höhe des Wasserspiegels und der Höhe ($H_{Öl}$) der auf dem Wasser schwimmenden Erdölschichten 1:0,1 bis 1:0,5 beträgt, wobei die Höhe ($H_{Öl}$) der Erdölschicht mitbestimmt ist durch den Zulauf (P) der Mischflüssigkeit.

3. Verfahren nach Anspruch 2, dadurch gekennzeichnet, daß die Höhe ($H_{Öl}$) der Erdölschicht bestimmt ist durch die Beziehung

$$H_{Öl} = 0,1 \sqrt[3]{P} \text{ bis } 0,25 \sqrt[3]{P}$$

4. Vorrichtung zum Durchführen des Verfahrens nach den Ansprüchen 1 bis 3, dadurch gekennzeichnet, daß in das Trenngefäß (1) zur Unterteilung eines Bereiches im Trenngefäß oberhalb seines Bodens in einen ersten und einen getrennten zweiten Abscheideraum von oben eine Trennwand (6) hineinragt, die mit vorbestimmtem Abstand ($H_3$)vom gemeinsamen Gefäßboden endet, daß der erste Abscheideraum an den Überlauf (4) für die leichtere Flüssigkeit und der getrennte zweite Abscheideraum an den Überlauf (5) für die schwerere Flüssigkeit angeschlossen ist, daß das Niveau des Überlaufes für die leichtere Flüssigkeit höher eingestellt ist als das Niveau für die schwerere Flüssigkeit, daß die Niveaudifferenz der Überläufe so gewählt ist, daß die im ersten Abscheideraum auf der schwereren Flüssigkeit schwimmende leichtere Flüssigkeit eine vorbestimmte Höhe aufweist, die von physikalischen Eigenschaften der zu trennenden Flüssigkeiten bzw. des Flüssigkeitsgemisches und der Zulaufmenge der Mischflüssigkeit pro Zeiteinheit bestimmt ist und daß das Austrittsende des Zulaufes (3) für die Mischflüssigkeit an die leichtere Flüssigkeitsschicht im ersten Abscheideraum angeschlossen ist oder oberhalb dieser liegt.

5. Vorrichtung nach Anspruch 4, dadurch gekennzeichnet, daß das Volumen zwischen der Trennwand (6) und dem Überlauf (4) für die leichtere Flüssigkeit wesentlich größer gewählt ist als das Volumen zwischen der Trennwand (6) und dem Überlauf (5) für die schwerere Flüssigkeit.

6. Vorrichtung nach Anspruch 4, dadurch gekennzeichnet, daß das Trenngefäß mehrere vertikale Scheidewände (2) aufweist, wobei die Gefäßräume zwischen den Scheidewänden miteinander verbunden sind.

7. Vorrichtung nach Anspruch 6, dadurch gekennzeichnet, daß die Scheidewände (2) in dem Gefäßraum zwischen der Trennwand (6) und dem Überlauf für die leichtere Flüssigkeit angeordnet sind.

8. Vorrichtung nach Anspruch 4, dadurch gekennzeichnet, daß das Verhältnis der Niveauhöhen ($H_1$, $H_2$) der Überläufe (4, 5) vertikale Abstand ($H_3$) der Trennwand (6) vom Gefäßboden (1') in Abhängigkeit von physikalischen Eigenschaften der zu trennenden Flüssigkeit bzw. der Mischflüssigkeit gewählt sind.

9. Vorrichtung nach Anspruch 4 zum Trennen einer Mischflüssigkeit aus Erdöl und Wasser, dadurch gekennzeichnet, daß die Verhältnisse

$H_1 : H_2 = 1:1,005 \text{ bis } 1:1,250$

und

$H_1 : H_3 = 1:0,05$ bis $1:0,20$

gewählt sind, wobei $H_1$ das Niveau des Wasserüberlaufs, $H_2$ das Nivau des Erdölüberlaufs, jeweils gemessen vom Gefäßboden und $H_3$ der Abstand des Gefäßbodens von der Trennwand ist.

10. Vorrichtung nach Anspruch 9, dadurch gekennzeichnet, daß das Verhältnis

$H_1 : H_{\ddot{O}l} = 1:0,1$ bis $1:0,5$

gewählt ist.

Europäisches
Patentamt

# EUROPÄISCHER RECHERCHENBERICHT

Nummer der Anmeldung

EP 92 11 3836

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br>Y | GB-A-2 089 670 (MEGATOR PUMPS & COMPRESSORS LTD.)<br>* Seite 1, Zeile 18 - Zeile 49; Abbildungen 6-10 *<br>* Seite 3, Zeile 10 - Zeile 101 *<br>--- | 1,2,4,<br>8-10<br>5 | B01D17/025 |
| Y<br>A | US-A-3 374 894 (J. D. WEBSTER)<br>* Spalte 1, Zeile 22 - Zeile 27; Abbildung 2 *<br>* Spalte 4, Zeile 39 - Zeile 71 *<br>--- | 5<br>6,7 | |
| A | GB-A-2 088 234 (TOSCO CORPORATION)<br>* Seite 2, Zeile 73 - Zeile 96; Abbildung 1 *<br>--- | 6,7 | |
| A | US-A-1 624 092 (COLEMAN)<br>* das ganze Dokument *<br>----- | 1,4 | |
| | | | RECHERCHIERTE SACHGEBIETE (Int. Cl.5 )<br><br>B01D |

Der vorliegende Recherchenbericht wurde für alle Patentansprüche erstellt

| Recherchenort | Abschlußdatum der Recherche | Prüfer |
|---|---|---|
| DEN HAAG | 03 MAERZ 1993 | MARZENKE J. |